# EUROPÄISCHE PATENTSCHRIFT

(11) **EP 1 590 572 B1**
(45) Veröffentlichungstag und Bekanntmachung des Hinweises auf die Patenterteilung: **11.03.2009**
(21) Anmeldenummer: 04706142.9
(22) Anmeldetag: 29.01.2004
(51) Int. Cl.: F15B 1/02

(54) **FEDERUNGSVORRICHTUNG**
SUSPENSION DEVICE
DISPOSITIF DE SUSPENSION

(30) Priorität: 07.02.2003 DE 10305790
(43) Veröffentlichungstag der Anmeldung: 02.11.2005
(73) Patentinhaber: Hydac System GmbH, 66280 Sulzbach/Saar (DE)
(72) Erfinder: KÜHN, Michael, 23936 Wotenitz (DE); SCHMIDT, Hubertus, 66280 Sulzbach (DE)
(74) Vertreter: Bartels, Martin Erich Arthur
(86) Internationale Anmeldenummer: PCT/EP2004/000762
(87) Internationale Veröffentlichungsnummer: WO 2004/070210

(56) Entgegenhaltungen:
- EP-A- 0 482 248
- EP-A- 1 157 963
- DE-A- 19 652 684
- US-B1- 6 167 701
- PATENT ABSTRACTS OF JAPAN Bd. 0130, Nr. 60 (M-796), 10. Februar 1989 (1989-02-10) & JP 63 265023 A (KOBE STEEL LTD), 1. November 1988 (1988-11-01)

## Beschreibung

Die Erfindung betrifft eine Federungsvorrichtung für mindestens einen abzufedernden Antriebsteil gemäß der Merkmalsausgestaltung des Oberbegriffes des Patentanspruches 1.

Eine Federungsvorrichtung ist durch die EP-A-1 157 963 bekannt. Die bekannte Lösung bezieht sich auf einen sog. Radlader mit einem schwenkbaren Auslegerarm, der darüber hinaus auch in seiner Länge veränderbar ist. Zum Bewegen des Auslegerarmes ist ein hydraulisches Antriebssystem vorgesehen mit einzelnen Hub- oder Arbeitszylindern, wobei vorzugsweise jedem bewegbaren Auslegerarmteil ein eigenständiger Arbeitszylinder als Antriebsteil zugeordnet ist. Mit den Arbeitszylindern des hydraulischen Systems ist es also möglich, die Schwenkbewegung für den Auslegerarm auszulösen; diesen durch Ein- und Ausfahren in der Länge zu verändern und über eine weitere Arbeitszylindereinheit kann eine beispielsweise an der freien Endseite des Auslegerarmes angeordnete Arbeitsgerätschaft, beispielsweise in Form einer Lastgabel, angesteuert werden. Dabei kann die Schwenkbewegung für den Auslegerarm über einen Parallelogrammtrieb realisiert werden, um die Arbeitshöhe des Auslegerarmes gegenüber dem Fahrzeugchassis gemäß den vorgegebenen Arbeitsbedingungen für den Radlader zu verändern.

Neben diesen genannten Antriebsmitteln in Form von Arbeitszylindern weist das hydraulische System bei der bekannten Radladerlösung eine Federungsvorrichtung auf, bestehend aus mindestens einem Hydraulikspeicher als Speichereinrichtung und mit mindestens zwei ansteuerbaren Ventileinheiten, die es erlauben, die Speichereinrichtung mit dem jeweiligen Hydraulikzylinder zu verbinden oder mit dem Umgebungs- oder Tankdruck in Form eines Tankanschlusses für die Federungsvorrichtung. Mit dieser Federungsvorrichtung ist es nun möglich, sowohl bei angehaltenem Antriebsteil, dessen beispielsweise durch eine Last vorgegebene Eigenbewegung abzudämpfen, als auch eine Dämpfung vorzunehmen, wenn das Antriebsteil betätigt wird, also mithin bei der bekannten Lösung der Kolben des Hydraulikzylinders ein- oder ausfährt. So lassen sich beispielsweise bei einer angehobenen Stellung des Auslegerarmes unter zu bewegender Last mittels der Arbeitsmaschine in Form des Radladers die damit einhergehenden Schwingbewegungen am Auslegerarm über die bekannte Federungsvorrichtung abdämpfen, wobei die bekannte Lösung es vorsieht, die dahingehende Dämpfung beizubehalten, wenn der Arbeitszylinder und mithin das Antriebsteil weiter betätigt wird, beispielsweise um dergestalt den Auslegerarm anzuheben oder abzusenken.

Obwohl die dahingehend bekannte Lösung zu insgesamt einem guten Dämpfungs- und Federungsverhalten führt und insgesamt eine sichere Betriebsweise des hydraulischen Systems für den Radlader ermöglicht, kann es zu Problemen kommen, wenn der abzufedernde Arbeitszylinder als Antriebsteil unter einer vorgebbaren Lastsituation steht, die mit einem entsprechenden Druckniveau, insbesondere auf der Kolbenseite des jeweiligen Arbeitszylinders, einhergeht und im skizzierten Sinne die Federung über den jeweiligen Hydraulikspeicher als Speichereinrichtung zugeschaltet wird, wenn diese nicht dasselbe Druckniveau aufweist wie das eingesetzte Antriebsteil in Form des jeweiligen Arbeitszylinders. In Abhängigkeit des unterschiedlichen Druckniveaus kann es dann zu deutlichen Ein- und Ausschwingvorgängen bei zugeschalteter Federung am jeweiligen Arbeitszylinder kommen, die in Abhängigkeit des Niveauunterschiedes erheblich sein können und zu sicherheitstechnisch bedenklichen Auslenkbewegungen am Antriebsteil führen und mithin an dem hier zu bewegenden mechanischen Bauteil, beispielsweise in Form des genannten Auslegerarmes. Ferner kann es ungewollt bedingt durch die Schwingvorgänge zu einem Wippen am Auslegerarm kommen, bis die verschiedenen Druckniveaus von jeweiligem Arbeitszylinder und Hydraulikspeicher sich aneinander angeglichen haben. Neben dem bereits genannten Sicherheitsrisiko kann es beim Anpassen der verschiedenen Druckniveaus auch zu Druckspitzen innerhalb der Verrohrung der Ventileinheiten kommen, was das gesamte hydraulische System der Arbeitsgerätschaft schädigen kann.

Durch die US-A-6 167 701 B1 ist eine gattungsgemäße Federungsvorrichtung bekannt für mindestens einen abzufedernden Antriebsteil, das mit einer der Federung dienenden Speichereinrichtung mittels einer ersten Ventileinheit fluidführend verbindbar ist und das mittels einer zweiten Ventileinheit mit einem Tankanschluß fluidführend verbindbar ist, wobei eine Druckausgleichseinrichtung vorgesehen ist, die betätigt den jeweils herrschenden Fluilddruck von dem Antriebsteil und von der Speichereinrichtung für das Erzeugen eines gemeinsamen Druckniveaus aneinander angleicht und wobei die Eingangsseite der Druckwaage an die Ausgangsseite der ersten Ventileinheit angeschlossen ist. Auch bei dieser bekannten Lösung kann es beim Anpassen der verschiedenen Druckniveaus auch zu Druckspitzen innerhalb der Verrohrung der Ventileinheiten kommen.

Ausgehend von diesem Stand der Technik liegt der Erfindung die Aufgabe zugrunde, unter Beibehalten der Vorteile der bekannten Lösung diese dahingehend weiter zu verbessern, dass die beschriebenen Nachteile nicht auftreten, insbesondere Sicherheitsrisiken und Überlastungen im hydraulischen System mit Sicherheit vermieden sind. Eine dahingehende Aufgabe löst eine Federungsvorrichtung mit den Merkmalen des Patentanspruches 1 in seiner Gesamtheit.

Dadurch, dass gemäß dem kennzeichnenden Teil des Patentanspruches 1 die Ausgangsseite der Druckwaage an eine dritte Ventileinheit angeschlossen ist, deren Ausgang mit dem Tankanschluß verbunden ist, braucht vor der Aktivierung der Federung nur kurzzeitig eine dritte Ventileinheit geöffnet zu werden, um den Druck aus dem Hydraulikspeicher auf das Niveau des aktuellen Druckes auf der Kolbenseite des Arbeitszylinders ablassen zu können.

Somit ist es möglich, bei Zuschaltung der eigentlichen Federung in Form der Speichereinrichtung vorab in kürzester Zeit einen Niveauausgleich für den Druck herbeizuführen, so dass der eingesetzte Federungsdruck genau auf den Druck des jeweiligen Antriebsteils in Form eines Hydraulik- oder Arbeitszylinders "aufsetzt", den dieser bedingt durch vorangegangene Lastbetätigungsvorgänge eben inne hat. Eine für die Umgebung gefährliche ungewollte Aus- und Einfahrbewegung des Kolbenstangenteils des jeweiligen Arbeitszylinders ist somit mit Sicherheit vermieden und es kommt auch nicht zu ungewollten Wippbewegungen am Antriebsteil und mithin an mechanischen Komponenten, wie einem Auslegerarm od. dgl., die durch das Antriebsteil angesteuert und betätigt werden. Da darüber hinaus bei der erfindungsgemäßen Lösung das gewünschte Druckniveau sich unmittelbar einstellt, sind Druckspitzen im hydraulischen System vermieden, was der Langlebigkeit des hydraulischen Gesamtsystems zugute kommt. Des weiteren ist die erfindungsgemäße Lösung funktionssicher und in der Herstellung kostengünstig zu realisieren.

Bei einer bevorzugten Ausführungsform der erfindungsgemäßen Federungsvorrichtung ist dabei die Druckausgleichseinrichtung in Parallelschaltung zu den beiden Ventileinheiten angeordnet und die Druckausgleichseinrichtung weist eine Druckwaage auf, deren Steuereingänge fluidführend einmal mit der Eingangsseite der ersten Ventileinheit verbunden sind und einmal mit der Ausgangsseite derselben ersten Ventileinheit.

Bei einer weiteren bevorzugten Ausführungsform der erfindungsgemäßen Federungsvorrichtung ist der jeweilige Hydraulikspeicher der Speichereinrichtung über ein Rückschlagventil, das vorzugsweise in der genannten ersten Ventileinheit integriert ist, vom Arbeitszylinder mit Druck aufladbar.

Hierdurch ist der Hydraulikspeicher, beispielsweise in Form eines Kolbenspeichers oder vergleichbarer Speicherlösungen, mit einem Ausgangsdruck des Antriebsteils unmittelbar aufgeladen und das dahingehende Druckniveau im Hydraulikzylinder kann für einen Federungsvorgang am Arbeitszylinder abgerufen werden, sobald über die Druckwaage vorab der notwendige Druckausgleich zwischen den beiden Teilsystemen hergestellt ist. Der jeweilige Hydraulikzylinder setzt dann unmittelbar auf dem ausgeglichenen Druckniveau des Hydraulikspeichers auf und gefährliche Verlagerungs-oder Wippbewegungen für das Antriebsteil in Form des Arbeitszylinders sind somit mit Sicherheit ausgeschlossen.

Weitere vorteilhafte Ausführungsformen sind Gegenstand der sonstigen Unteransprüche.

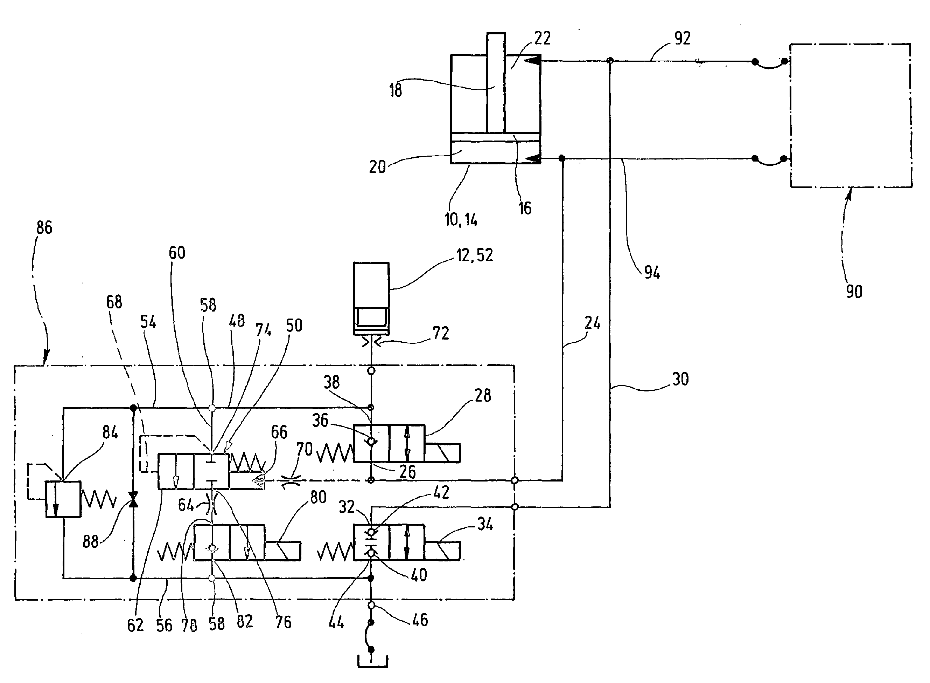

Im folgenden wird die erfindungsgemäße Federungsvorrichtung anhand der einzigen Zeichnung näher erläutert, die in prinzipieller Schaltdarstellung den Aufbau der erfindungsgemäßen Federungsvorrichtung zeigt.

Die erfindungsgemäße Federungsvorrichtung ist für mindestens einen abzufedernden Antriebsteil 10 vorgesehen und weist mindestens eine der Federung dienende Speichereinrichtung 12 auf. Das Antriebsteil 10 besteht aus einem üblichen Arbeits-oder Hydraulikzylinder 14, dessen Kolben-16 und Stangenteil 18 den Arbeitszylinder 14 in zwei fluidführende Arbeitsräume 20,22 unterteilt und in Abhängigkeit für die jeweils in den Arbeitsraum 20,22 aufgenommene Fluidmenge ergibt sich hieraus eine vorgebbare Position für das Kolbenstangenteil 16,18.

So ist der Arbeitsraum 20 über eine erste Verbindungsleitung 24 fluidführend mit dem Eingang 26 einer ersten Ventileinheit 28 verbunden und der weitere zweite Arbeitsraum 22 ist entsprechend fluidführend über eine zweite Verbindungsleitung 30 mit dem Eingang 32 einer zweiten Ventileinheit 34 verbunden. Die genannten beiden Ventileinheiten 28 und 34 stellen übliche elektrisch ansteuerbare 2/2-Wege-Schaltventile dar, die im unbetätigten federbelasteten Zustand zumindest in einer Fluidrichtung des jeweiligen Ventils eine Sperrstellung einnehmen. So ist die erste Ventileinheit 28 in ihrer unbetätigten federbelasteten Ausgangsstellung in Richtung ihres Einganges 26 über ein integriertes Rückschlagventil 36 gesperrt, das in Richtung des Ausgangs 38 der ersten Ventileinheit 28 in seine Offenstellung bewegbar ist. Wie des weiteren die Figur zeigt, sind hingegen die beiden gegeneinander gesperrten Rückschlagventile 40,42 eben derart angeordnet, dass in der unbetätigten Ausgangsstellung der zweiten Ventileinheit 34 in beiden Richtungen, also in Richtung des Einganges 32 zum Ausgang 44 der zweiten Ventileinheit 30 als auch in umgekehrter Richtung, eine Fluidsperrung erfolgt. Des weiteren ist der genannte Ausgang 44 der zweiten Ventileinheit 34 fluidführend mit einem Tankanschluß 46 verbunden, der zur Tankanlage des hydraulischen Systems führt, für das die erfindungsgemäße Federungsvorrichtung vorgesehen ist. Anstelle des integrierten Rückschlagventils 36 bei der ersten Ventileinheit 28 kann dieses Rückschlagventil bei einer nicht näher dargestellten Ausführungsform der Schaltung parallel zur Ventileinheit 28 geschaltet sein und einen fluidführenden Anschluß jeweils vor dem Eingang 26 und dem Ausgang 38 aufweise, wobei das Rückschlagventil wiederum in Richtung des Ausganges 38 seine geöffnete Stellung einnimmt. In einem dahingehenden Fall ist die erste Ventileinheit 28 mit zwei gegensinnig entsperrbaren Rückschlagventilen versehen, wie die gezeigte zweite Ventileinheit 34. Dies hat den Vorteil, dass man zur Realisierung der Schaltung auf gleich aufbauende Ventileinheiten 28,34 zurückgreifen kann.

In Parallelschaltung 48 zu den beiden genannten Ventileinheiten 28,34 ist eine als Ganzes mit 50 bezeichnete Druckausgleichseinrichtung angeordnet, die im betätigten Zustand den jeweils herrschenden Fluiddruck von Antriebsteil 10 (Hydraulikzylinder) und von der Speichereinrichtung 12 (Hydraulikzylinder) aneinander angleicht. Die bereits angeführte Speichereinrichtung 12 besteht regelmäßig aus einem Hydrospeicher bzw. Hydraulikzylinder 52, beispielsweise in Form eines Kolbenspeichers od. dgl.. Die Verwendung von Hydrospeicheranordnungen zum Federn und Dämpfen von Bewegungsabläufen bei Arbeitszylindern ist im Stand der Technik bekannt (vgl. EP-A-1 157 963) und die dahingehenden Anordnungen können auch zur "Energierückgewinnung" verwendet werden, bei denen vorgesehen ist, in der einen Arbeitsbewegung des Arbeitszylinders die hydraulische Energie in den Hydrospeicher einzubringen und von dort dann gezielt abzurufen, sofern der Hydraulikzylinder in der gegenteiligen Richtung bewegt wird. Dergestalt lassen sich in relevantem Umfang Energieeinsparungen beim Betrieb von Arbeitsmaschinen mit hydraulischer Arbeitszylindergerätschaft erreichen.

Sofern die Druckausgleichseinrichtung 50 in Parallelschaltung 48 zu den beiden Ventileinheiten 28,34 angeordnet ist, bedeutet dies, dass zwei weitere Verbindungsleitungen 54,56 vom Ausgang 38 der ersten Ventileinheit 28 wegführen bzw. vom Ausgang 44 der zweiten Ventileinheit 34, und dass zwischen zwei dahingehenden Anschlußstellen 58 in einer die Anschlußstellen 58 verbindenden Abzweigleitung 60 die Druckausgleichseinrichtung 50 angeordnet ist, die im wesentlichen aus einer Druckwaage 62 besteht. Unter einer Druckwaage versteht man üblicherweise ein Ventilbauelement, das die Aufgabe hat, den durch eine Meßdrossel gegebenen Volumenstrom auch bei schwankendem Lastdruck konstant zu halten. Dazu arbeitet die Druckwaage in einem internen Regelkreis als Differenzdruckregler, dessen bewegliche Steuerkante sich so verändern kann, dass die Druckdifferenz an der Meßblende immer konstant ist, unabhängig vom herrschenden Lastdruck. Dabei kann die Druckwaage 62 der Meßdrossel 64 wie im gezeigten Ausführungsbeispiel vorgeschaltet sein. Die Druckwaage 62 weist darüber hinaus zwei Steuereingänge 66,68 auf, wobei der Steuereingang 66 über eine weitere Drossel 70 vom Fluiddruck am Eingang 26 der ersten Ventileinheit 28 ansteuerbar ist und der zweite Steuereingang 68 auf der gegenüberliegenden Seite der Druckwaage 62 ist vom in der dritten Verbindungsleitung 54 herrschenden Fluiddruck ansteuerbar, an die auch der Hydraulikspeicher 52 über eine Blende 72 fluidführend angeschlossen ist. Die Eingangsseite 74, an die der zweite Steuereingang 68 angeschlossen ist, ist mithin über die dritte Verbindungsleitung 54 mit der Ausgangsseite 38 der ersten Ventileinheit 28 verbunden, wobei wiederum die Ausgangsseite 76 der Druckwaage 62, vorzugsweise über die Meßdrossel 64, mit dem Eingang 78 einer dritten Ventileinheit 80 verbunden ist, deren Ausgang 82 wiederum fluidführend mit dem Tankanschluß 46 verbunden ist.

Die genannten drei Ventileinheiten 28,34 und 80 bilden zusammen mit der Druckwaage 62 und einem auf einen vorgebbaren Druck einstellbaren Druckbegrenzungsventil 84, das wiederum in Parallelschaltung zur Druckwaage 62 den jeweiligen Hydraulikspeicher 52 vor Überdruck schützt, als Federungssteuerblock 86 eine nachrüstbare Funktionseinheit aus, die man mithin auch bei bereits bestehenden und ausgelieferten Arbeitsmaschinen jedweder Art nachträglich einsetzen kann, sofern man bei verschiedenen Anlagen deren Federungskomfort und Sicherheit verbessern möchte: Zwischen der Abzweigleitung 60 und dem in Parallelschaltung angeordneten Druckbegrenzungsventil 84 ist wiederum zu der Druckausgleichseinrichtung 50 parallel geschaltet ein Absperrventil 88 angeordnet, über das der Druck aus dem Hydraulikspeicher 52, beispielsweise für die Durchführung von Wartungsarbeiten, abgelassen werden kann.

Des weiteren ist für das jeweilige Antriebsteil 10 ein als Ganzes mit 90 bezeichneter Steuerblock vorgesehen, der, was im Stand der Technik (EP-A-1 157 963) üblich ist, über zwei Steuerleitungen 92,94 die Hauptfunktion für das Antriebsteil 10 gewährleistet, nämlich die Ansteuerung für das Ein-und Ausfahren des Kolbenstangenteils 16,18 des Arbeitszylinders 14 ermöglicht. So wird bei entsprechendem Betätigen des Steuerblockes 90 unter Druck stehendes Fluid in den Arbeitsraum 20 des Arbeitszylinders 14 gebracht und derart die Kolbenstangeneinheit 16,18 angehoben. Das im weiteren Arbeitsraum 22 überschüssige Fluid wird bei der dahingehenden Anhebebewegung über die weitere Steuerleitung 92 in den Steuerblock 90 rückgeführt. Für eine Absenkbewegung der Kolbenstangeneinheit 16,18 läßt sich der dahingehende Vorgang umkehren und überschüssiges Fluid auf der Arbeitsraumseite 20 gelangt über die Steuerleitung 94 dann zurück in den Steuerblock 90, wobei in Abhängigkeit der angreifenden Lastsituation der dahingehende Rückführvorgang auch über einen entsprechenden in der ersten Steuerleitung 92 anstehenden Fluiddruck unterstützt werden kann.

Im folgenden wird nunmehr des besseren Verständnisses wegen die Funktion der erfindungsgemäßen Federungsvorrichtung anhand eines Arbeitsbeispiels näher erläutert.

Bei abgeschalteter oder blockierter Federung kann sich die Belastung des Ausleger - Hubzylinders 14 durch Längenänderung des Teleskopauslegers und durch Be- oder Entladen einer Lastschaufel bzw. Lastgabel (nicht dargestellt) verändern. Bei der nachfolgenden Aktivierung der Federung sollen dann undefinierte Bewegungen, die durch den in dem jeweiligen Hydraulikspeicher 52 gegenüber dem Arbeitszylinder 14 eingesperrten unterschiedlichen Niveaudruck verursacht sind, vermieden werden.

Hierzu ist der Hydraulikspeicher 52 ständig über das Rückschlagventil 36 mit dem Arbeitsraum 20 der Kolbenseite 16 des Arbeitszylinders 14 verbunden und wird dabei mit dem maximalen Druck, der im jeweiligen Arbeitsspiel mit dem Arbeitszylinder 14 auftritt, aufgeladen. Vor der Aktivierung der Federung wird nun kurzzeitig die dritte Ventileinheit 80 geöffnet, so dass in diesem Moment die Druckwaage 62 den Druck aus dem Hydraulikspeicher 52 auf das Niveau des aktuellen Druckes auf der Kolbenseite des Arbeitszylinders 14 ablassen kann. Unmittelbar danach wird das Ventil 80 wiederum geschlossen.

Zum Aktivieren der Federung wird durch Öffnen der ersten Ventileinheit 28, die als eine Art Federungs - Sperrventil anzusehen ist, diese in die geöffnete fluidführende Ventilstellung gebracht und somit die Kolbenseite des Arbeitszylinders 144 mit dem Hydraulikspeicher 52 verbunden. Die Stangenseite, also der Arbeitsraum 22 des Arbeitszylinders 14, wird dann durch gleichzeitiges Öffnen der zweiten Ventileinheit 34, die in der Art eines Nachsaugventils ausgebildet ist, mit dem Tankanschluß 46 und mithin mit dem Tank verbunden. Die derart aktivierte Federung kann dann auch beim Betrieb des Arbeitszylinders 14, bei dem sich die Kolbenstangeneinheit 16,18 innerhalb des Zylindergehäuses in ihrer Lage verändert, beibehalten werden. Sofern das Nachsaugventil 34 geschlossen ist und zur Aktivierung der Federung das Federungssperrventil 28 geöffnet, kann über den Steuerblock 90 der Arbeitszylinder 14 für Ein- und Ausfahrvorgänge seines Kolbenstangenteils 16,18 bewegt werden, wobei dann der in den beiden Steuerleitungen 92,94 anstehende Fluiddruck dafür Sorge trägt, dass ein Fluidfluß über die zweite Steuerleitung 94 zwischen dem Arbeitsraum 20 des Hydraulikzylinders 14 und dem Steuerbock 90 hergestellt ist.

Dadurch, dass im Sinne der erfindungsgemäßen Lösung der Hydraulikspeicher 52 über ein Rückschlagventil 36 mit dem Druck aus dem Arbeitszylinder 14 aufgeladen wird und dass vor dem Aktivieren der Federung der Druck zwischen dem Hydraulikspeicher 52 und dem Arbeitszylinder 14 über die Druckwaage 62 ausgeglichen wird, sind undefinierte, die Sicherheit beeinträchtigende Bewegungen der angesteuerten mechanischen Teile einer Arbeitsgerätschaft oder Arbeitsmaschine, wie einem Teleskoplader, mit Sicherheit vermieden und durch die sanfte Entsperrung sowie Aufschaltung des Federungsdruckes sind das hydraulische System schädigende Druckspitzen gleichfalls vermieden.

## Patentansprüche

1. Federungsvorrichtung für mindestens einen abzufedernden Antriebsteil (10), das mit einer der Federung dienenden Speichereinrichtung (12) mittels einer ersten Ventileinheit (28) fluidführend verbindbar ist und das mittels einer zweiten Ventileinheit (34) mit einem Tankanschluß (46) fluidführend verbindbar ist, wobei eine Druckausgleichseinrichtung (50) vorgesehen ist, die betätigt den jeweils herrschenden Fluiddruck von dem Antriebsteil (10) und von der Speichereinrichtung (12) für das Erzeugen eines gemeinsamen Druckniveaus aneinander angleicht, wobei die Druckausgleichseinrichtung (50) eine Druckwaage (62) aufweist, deren Steuereingänge (66,68) fluidführend einmal mit der Eingangsseite (26) der ersten Ventileinheit (28) verbunden sind und einmal mit der Ausgangsseite (38) der ersten Ventileinheit (28), und wobei die Eingangsseite (74) der Druckwaage (62) an die Ausgangsseite (38) der ersten Ventileinheit (28) angeschlossen ist, **dadurch gekennzeichnet, dass** die Ausgangsseite (76) der Druckwaage (62) an eine dritte Ventileinheit (80) angeschlossen ist, deren Ausgang (82) mit dem Tankanschluß (46) verbunden ist.

2. Federungsvorrichtung nach Anspruch 1, **dadurch gekennzeichnet, dass** das Antriebsteil (10) aus mindestens einem Arbeitszylinder (14) besteht und dass die Speichereinrichtung (12) mindestens einen Hydraulikspeicher (52) aufweist.

3. Federungsvorrichtung nach Anspruch 1 oder 2, **dadurch gekennzeichnet, dass** die Druckausgleichseinrichtung (50) in Parallelschaltung (48) zu den beiden Ventileinheiten (28,34) angeordnet ist.

4. Federungsvorrichtung nach Anspruch 2 oder 3, **dadurch gekennzeichnet, dass** der jeweilige Hydraulikspeicher (52) über ein Rückschlagventil (36), das vorzugsweise in der ersten Ventileinheit (28) integriert ist, vom Arbeitszylinder (14) mit dem Fluiddruck aufladbar ist.

5. Federungsvorrichtung nach einem der Ansprüche 2 bis 4, **dadurch gekennzeichnet, dass** der jeweilige Arbeitszylinder (14) mit seiner Kolbenseite (16,20) eingangsseitig (26) an die erste Ventileinheit (28) angeschlossen ist, an der ausgangsseitig (38) der jeweilige Hydraulikspeicher (52) angeschlossen ist, und dass der jeweilige Arbeitszylinder (14) mit seiner Stangenseite (18,22) eingangsseitig (32) an die zweite Ventilsteuereinheit (34) angeschlossen ist, an der ausgangsseitig (44) der Tankanschluß (46) angeordnet ist.

6. Federungsvorrichtung nach einem der Ansprüche 1 bis 5, **dadurch gekennzeichnet, dass** der eine Steuereingang (66) der Druckwaage (62), der fluidführend mit der Eingangsseite (26) der ersten Ventileinheit (28) verbunden ist, mit einer Drossel (70) versehen ist.

7. Federungsvorrichtung nach einem der Ansprüche 1 bis 7, **dadurch gekennzeichnet, dass** die Ausgangsseite (76) der Druckwaage (62) über eine Meßdrossel (64) an die dritte Ventileinheit (80) angeschlossen ist.

8. Federungsvorrichtung nach Anspruch 8, **dadurch gekennzeichnet, dass** die drei Ventileinheiten (28,34,80) zusammen mit der Druckwaage (62) und einem Druckbegrenzungsventil (84), das in Parallelschaltung zur Druckwaage (62) den jeweiligen Hydraulikspeicher (52) vor Überdruck schützt, als Federungssteuerblock (86) eine nachrüstbare Funktionseinheit ausbilden.

9. Federungsvorrichtung nach einem der Ansprüche 1 bis 9, **dadurch gekennzeichnet, dass** das jeweilige Antriebsteil (10) über zwei Steuerleitungen (92,94) mittels eines Steuerblockes (90) ansteuerbar ist.

## Claims

1. A suspension device for at least one drive part (10) to be cushioned which can be connected, such as to convey fluid, to an accumulator device (12) serving the suspension by means of a first valve unit (28) and which can be connected, such as to convey fluid, to a tank connection (46) by means of a second valve unit (34), a pressure compensation device (50) being provided which, when operated, assimilates the respectively prevailing fluid pressure of the drive part (10) and of the accumulator device (12) in order to generate a common pressure level, the pressure compensation device (50) having a pressure scale (62) the control inputs (66, 68) of which are connected, such as to convey fluid, once to the input side (26) of the first valve unit (28) and once to the output side (38) of the first valve unit (28), and the input side (74) of the pressure scale (62) being connected to the output side (38) of the first valve unit (28), **characterised in that** the output side (76) of the pressure scale (62) is connected to a third valve unit (80) the output (82) of which is connected to the tank connection (46).

2. The suspension device according to Claim 1, **characterised in that** the drive part (10) comprises at least one working cylinder (14) and that the accumulator device (12) has at least one hydraulic accumulator (52).

3. The suspension device according to Claim 1 or 2, **characterised in that** the pressure compensation device (50) is disposed in parallel connection (48) to the two valve units (28, 34).

4. The suspension device according to Claim 2 or 3, **characterised in that** the respective hydraulic accumulator (52) can be charged by the working cylinder (14) with the fluid pressure by means of a check valve (36) which is preferably integrated into the first valve unit (28).

5. The suspension device according to any of Claims 2 to 4, **characterised in that** the respective working cylinder (14) is connected with its piston side (16, 20) on the input side (26) to the first valve unit (28) to which on the output side (38) the respective hydraulic accumulator (52) is connected, and that the respective working cylinder (14) is connected with its rod side (18, 22) on the input side (32) to the second valve control unit (34) on which on the output side (44) the tank connection (46) is disposed.

6. The suspension device according to any of Claims 1 to 5, **characterised in that** the one control input (66) of the pressure scale (62), which is connected such as to convey fluid to the input side (26) of the first valve unit (28), is provided with a throttle (70).

7. The suspension device according to any of Claims 1 to 7, **characterised in that** the output side (76) of the pressure scale (62) is connected by a metering throttle (64) to the third valve unit (80).

8. The suspension device according to Claim 8, **characterised in that** the three valve units (28, 34, 80) together with the pressure scale (62) and a pressure limiting valve (84), which in parallel connection to the pressure scale (62) protects the respective hydraulic accumulator (52) from overpressure, as a suspension control block (86) form a retrofittable functional unit.

9. The suspension device according to any of Claims 1 to 9, **characterised in that** the respective drive part (10) can be controlled via two control lines (92, 94) by means of a control block (90).

## Revendications

1. Dispositif de suspension d'au moins une partie (10) d'entraînement à suspendre, qui peut communiquer fluidiquement, au moyen d'une unité (28) de vanne, avec un dispositif (12) accumulateur servant à la suspension et qui peut communiquer fluidiquement, au moyen d'une deuxième unité (34) de vanne, avec un raccord (46) de cuve, un dispositif (50) de compensation de la pression étant prévu, dispositif qui, actionné, égalise entre elles respectivement la pression de fluide régnant par la partie (10) d'entraînement et par le dispositif (12) d'accumulation pour la production d'un niveau de pression commun, le dispositif (50) de compensation de la pression comprenant une balance (62) de pression, dont les entrées (66, 68) de commande communiquent fluidiquement d'une part avec le côté (26) d'entrée de la première unité (28) de vanne et d'autre part avec le côté (38) de sortie de la première unité (28) de vanne et le côté (74) d'entrée de la balance (62) de pression étant raccordé au côté (38) de sortie de la première unité (28) de vanne, **caractérisé en ce que** le côté (76) de sortie de la balance (62) de pression est raccordé à une troisième unité (80) de vanne, dont la sortie (82) communique avec le raccord (46) de cuve.

2. Dispositif de suspension suivant la revendication 1, **caractérisé en ce que** la partie (10) d'entraînement est constituée d'au moins un cylindre (14) de travail et **en ce que** le dispositif (12) d'accumulation a au moins un accumulateur (62) hydraulique.

3. Dispositif de suspension suivant la revendication 1 ou 2, **caractérisé en ce que** le dispositif (50) de compensation de la pression est monté en circuit (48) parallèle aux deux unités (28, 34) de vanne.

4. Dispositif de suspension suivant la revendication 2 ou 3, **caractérisé en ce que** l'accumulateur (52) hydraulique respectif peut, par un clapet (36) antiretour qui, de préférence, est intégré dans le premier groupe (28) de vanne, être chargé par la pression du fluide par le cylindre (14) de travail.

5. Dispositif de suspension suivant l'une des revendications 2 à 4, **caractérisé en ce que** le cylindre (14) respectif de travail est raccordé par son côté (16, 20) piston du côté (26) d'entrée à la première unité (28) de vanne, à laquelle est raccordé du côté (38) de sortie l'accumulateur (52) hydraulique respectif, et **en ce que** le cylindre (14) respectif de travail est raccordé par son côté (18, 20) de tige du côté (32) de l'entrée à la deuxième unité (34) de commande de vanne, sur laquelle est disposé du côté (44) de sortie le raccord (46) de cuve.

6. Dispositif de suspension suivant l'une des revendications 1 à 5, **caractérisé en ce que** l'une des entrées (66) de commande de la balance (62) de pression, qui communique fluidiquement avec le côté (26) d'entrée de la première unité (28) de vanne, est munie d'un étranglement (70).

7. Dispositif de suspension suivant l'une des revendications 1 à 7, **caractérisé en ce que** le côté (76) de sortie de la balance (62) de pression est raccordé à la troisième unité (80) de vanne par un étranglement (64) de mesure.

8. Dispositif de suspension suivant la revendication 7, **caractérisé en ce que** les trois unités (28, 34, 80) de vanne forment, ensemble avec la balance (62) de pression et une vanne (84) de limitation de la pression qui protège dans le circuit parallèle à la balance (62) de pression l'accumulateur (52) hydraulique respectif de la surpression, une unité fonctionnelle de rééquipement sous la forme d'un bloc (86) de commande de suspension.

9. Dispositif de suspension suivant l'une des revendications 1 à 8, **caractérisé en ce que** la partie (10) respective d'entraînement peut être commandée par deux lignes (92, 94) de commande au moyen d'un bloc (90) de commande.
